(19) Europäisches Patentamt
European Patent Office
Office européen des brevets

(11) **EP 3 569 528 B1**

(12) **EUROPÄISCHE PATENTSCHRIFT**

(45) Veröffentlichungstag und Bekanntmachung des Hinweises auf die Patenterteilung:
**29.07.2020   Patentblatt 2020/31**

(51) Int Cl.:
***B65G 54/02*** *(2006.01)*

(21) Anmeldenummer: **18172565.6**

(22) Anmeldetag: **16.05.2018**

(54) **TRANSPORTSYSTEM**

TRANSPORT SYSTEM

SYSTÈME DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.11.2019   Patentblatt 2019/47**

(73) Patentinhaber: **Schneider Electric Industries SAS**
**92500 Rueil-Malmaison (FR)**

(72) Erfinder:
• **Rothaug, Andreas**
**97839 Esselbach (DE)**
• **Janek, Gunther**
**63773 Goldbach (DE)**

• **Stollberger, Martin**
**97297 Waldbüttelbrunn (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A1- 3 276 076        EP-A1- 3 385 110**
**EP-A2- 0 179 188        EP-A2- 0 246 096**
**JP-A- H04 183 208     JP-A- H08 163 712**
**JP-A- S63 167 119**

EP 3 569 528 B1

**Beschreibung**

Die vorliegende Erfindung betrifft ein Transportsystem, insbesondere ein Multi-Carrier-System. Das Transportsystem umfasst zumindest ein Transportelement und zumindest einen Linearmotor, wobei das Transportelement mittels des Linearmotors bewegbar ist und/oder bewegt wird. Während einer Bewegung durch den Linearmotor liegt das Transportelement auf einer Führungsbahn des Linearmotors auf. Das Transportelement umfasst zumindest einen Magneten, welcher eine Anziehungskraft erzeugt, durch welche das Transportelement an die Führungsbahn angedrückt wird.

Ein Transportsystem gemäß dem Oberbegriff des Anspruchs 1 ist aus der EP 3 276 076 A1 bekannt.

Solche Transportsysteme, d.h. insbesondere Multi-Carrier-Systeme, umfassen bevorzugt eine Vielzahl von Transportelementen, welche mittels mehreren, entlang der Führungsbahn angeordneten Linearmotoren bewegt werden. Die Transportelemente sind dabei einzeln und unabhängig voneinander bewegbar, so dass Multi-Carrier-Systeme die Möglichkeit schaffen, flexibel an verschiedene industrielle Prozesse angepasst zu werden und insbesondere auch auf Veränderungen in einem industriellen Prozess flexibel reagieren können.

Um ein möglichst flexibles Transportsystem zu schaffen, muss es daher möglich sein, mit den Transportelementen viele verschiedene Transportaufgaben durchzuführen und insbesondere mit hohen Geschwindigkeiten zu fahren. Auch ein Austausch der Transportelemente muss ohne großen Aufwand möglich sein.

Es ist deshalb die der Erfindung zugrundeliegende Aufgabe, ein Transportsystem der eingangs genannten Art derart weiterzubilden, dass das Einsatzspektrum des Transportsystems erhöht wird und insbesondere Veränderungen des Transportsystems auf einfache Art und Weise möglich sind.

Diese Aufgabe wird erfindungsgemäß durch ein Transportsystem gemäß Anspruch 1 gelöst.

Das Transportsystem ist ausgebildet, die von dem Magneten erzeugte Anziehungskraft auf einen Steuerbefehl hin zu stärken und/oder zu schwächen. Es versteht sich, dass zu einem jeweiligen Zeitpunkt die Anziehungskraft entweder nur gestärkt oder nur geschwächt werden kann, das Transportsystem aber zum Schwächen und Stärken ausgebildet ist.

Dies bedeutet, das Transportsystem ist in der Lage, die Anziehungskraft absichtlich und/oder aktiv zu stärken und/oder zu schwächen. Hierdurch ergeben sich viele Vorteile für das Transportsystem. Beispielsweise kann das Transportelement schneller durch Kurven hindurchbewegt werden, da die in der Kurve auftretende Zentrifugalkraft durch eine Stärkung der Anziehungskraft ausgeglichen werden kann. Andererseits kann z.B. das Entfernen des Transportelements von der Führungsbahn auf einfache Weise und insbesondere manuell ermöglicht werden, indem die Anziehungskraft geschwächt werden kann, wodurch die zum Entfernen des Transportelements von der Führungsbahn notwendige Kraft deutlich reduziert werden kann. Auf die hierzu bisher üblicherweise notwendige Hilfe eines Roboters oder auf den Einsatz von Hebe- und/oder Hebelwerkzeugen kann dann verzichtet werden. Insgesamt kann das erfindungsgemäße Transportsystem somit flexibler und in einem erweiterten Einsatzspektrum eingesetzt werden, da z.B. höhere Kurvengeschwindigkeiten möglich sind. Zudem wird der Wartungs- und/oder Umrüstaufwand bei Veränderungen des Transportsystems gesenkt.

Es versteht sich, dass durch das Stärken oder Schwächen jeweils bevorzugt die resultierende Anziehungskraft gestärkt bzw. geschwächt wird.

Nachfolgend werden weitere Details des erfindungsgemäßen Transportsystems erläutert.

Bei dem Magneten des Transportelements kann es sich bevorzugt um einen oder mehrere Permanentmagnete handeln. Die Permanentmagnete werden mittels eines sich verändernden und/oder wandernden Magnetfelds, welches von dem Linearmotor erzeugt wird, mit einer Antriebskraft beaufschlagt, wobei die Antriebskraft zu einer Bewegung des Transportelements entlang der Führungsbahn führt. Mittels des Transportelements können dabei z.B. Werkstücke entlang der Führungsbahn transportiert werden.

Entlang der Führungsbahn kann eine Vielzahl von Linearmotoren hintereinander angeordnet sein. Auf der Führungsbahn können bevorzugt mehrere Transportelemente gleichzeitig angeordnet sein und insbesondere unabhängig und separat voneinander bewegt werden.

Die Anziehungskraft besitzt bevorzugt eine Richtung, welche senkrecht zu der Bewegungsrichtung des Transportelements und damit auch senkrecht zu der Antriebskraft ist. Die Richtung der Anziehungskraft verläuft weiter bevorzugt von der Führungsbahn hin zu dem Linearmotor bzw. zu Spulen des Linearmotors.

Die Anziehungskraft wird üblicherweise dadurch erzeugt, dass der Magnet des Transportelements zu metallischen beziehungsweise magnetischen Komponenten des Linearmotors und/oder der Führungsbahn hingezogen wird.

Unter der Anziehungskraft ist die im jeweiligen Moment wirkende Kraft zu verstehen, die das Transportelement auf die Führungsbahn drückt. Das Transportelement kann bevorzugt dauerhaft mittels Rollen oder einer gleitenden Oberfläche auf der Führungsbahn aufliegen.

Das Transportelement kann auch als sogenannter Mover bezeichnet werden, wohingegen der Linearmotor auch als Stator bezeichnet werden kann.

Der Steuerbefehl, welcher das Stärken oder Schwächen der Anziehungskraft bewirkt, wird bevorzugt von dem Transportsystem selbst erzeugt. Allerdings ist es ebenfalls möglich, dass der Steuerbefehl von einer externen Einheit erzeugt und von dem Transportsystem empfangen wird. Der Steuerbefehl kann grundsätzlich in beliebiger Form ausgestaltet sein, solange für das Transportsystem erkennbar ist, dass ein Stärken oder ein Schwächen erfolgen soll. Der Steuerbefehl kann auch die Größe der Stärkung und/oder Schwächung umfassen (z.B. -50%, +50% oder +75%).

Vorteilhafte Weiterbildungen der Erfindung sind der Beschreibung, den Figuren und den Unteransprüchen zu entnehmen.

Gemäß einer ersten vorteilhaften Ausführungsform erfolgt das Stärken und/oder das Schwächen der von dem Magneten erzeugten Anziehungskraft mittels eines von dem Linearmotor erzeugten Anpassungsmagnetfelds. Dies bedeutet, der Linearmotor erzeugt das Anpassungsmagnetfeld, wobei das Anpassungsmagnetfeld auf den Magneten des Transportelements wirkt. Das Anpassungsmagnetfeld ist so gerichtet, dass die Anziehungskraft entweder verstärkt wird oder dass das Anpassungsmagnetfeld der Anziehungskraft entgegenwirkt und die Anziehungskraft damit schwächt. Insbesondere wird die Anziehungskraft gestärkt, wenn das Anpassungsmagnetfeld den Magneten des Transportelements in Richtung des Linearmotors zieht. In entsprechender Weise wird die Anziehungskraft geschwächt, wenn das Anpassungsmagnetfeld den Magneten des Transportelements von dem Linearmotor wegdrückt.

Alternativ oder zusätzlich wäre es möglich, das Stärken und/oder Schwächen der Anziehungskraft durch das mechanische Einbringen von zusätzlichen Magneten, insbesondere Permanentmagneten, zu bewirken. Diese zusätzlichen Magnete können dann das Anpassungsmagnetfeld erzeugen und so das Transportelement z.B. abstoßen.

Gemäß einer weiteren vorteilhaften Ausführungsform erzeugt das Anpassungsmagnetfeld ausschließlich eine (resultierende) Kraft in Richtung der Anziehungskraft oder entgegengesetzt zur Anziehungskraft. Anders ausgedrückt führt das Anpassungsmagnetfeld nicht zu einer Bewegung des Transportelements oder zu einer Veränderung einer bereits stattfindenden Bewegung des Transportelements. Das Anpassungsmagnetfeld kann daher effektiv nur eine Kraftkomponente in Richtung der Anziehungskraft oder entgegengesetzt der Anziehungskraft umfassen, so dass keine Kraftkomponente durch das Anpassungsmagnetfeld geschaffen wird, die derart quer zur Anziehungskraft verläuft, dass dann eine Bewegung des Transportelements die Folge wäre. Hierbei ist von Vorteil, dass eine Veränderung der Anziehungskraft durch das Anpassungsmagnetfeld keinen Einfluss auf die Bewegung des Transportelements und damit auf dessen Bewegungssteuerung hat. Eine komplexere Positions-Regelung für das Transportelement oder eine Nachregelung ist dementsprechend nicht notwendig.

Gemäß einer weiteren vorteilhaften Ausführungsform ist das Transportsystem ausgebildet, eine Position des Transportelements zu bestimmen. Bevorzugt wird das Anpassungsmagnetfeld mittels des Linearmotors derart im Bereich des Transportelements erzeugt, dass das Anpassungsmagnetfeld nur eine Kraft in Richtung der Anziehungskraft oder entgegengesetzt der Anziehungskraft erzeugt. Aufgrund der bekannten Position des Transportelements ist auch die Position des Magneten des Transportelements bekannt. Daher kann das Anpassungsmagnetfeld an einer geeigneten Position, insbesondere einer geeigneten Position innerhalb der Führungsbahn, erzeugt werden, so dass das Anpassungsmagnetfeld in dem Magneten nur eine Kraft in Richtung der Anziehungskraft oder entgegengesetzt der Anziehungskraft erzeugt. Die geeignete Position des Anpassungsmagnetfelds befindet sich üblicherweise auf einer Senkrechten zur Bewegungsrichtung des Transportelements und zwischen dem Magneten und dem Linearmotor. Während einer Bewegung des Transportelements kann das Anpassungsmagnetfeld bevorzugt mit dem Transportelement mitwandern. Auf diese Weise kann eine Veränderung der Anziehungskraft auch bei bewegten Transportelementen realisiert werden.

Ein gegebenenfalls von dem Linearmotor erzeugtes Magnetfeld, welches zum Bewegen des Transportelements vorgesehen ist (d.h. ein Antriebsmagnetfeld) wird bevorzugt unabhängig von dem Anpassungsmagnetfeld erzeugt. Insbesondere können sich Anpassungsmagnetfeld und Antriebsmagnetfeld überlagern. Die Richtungen des Anpassungsmagnetfelds und des Antriebsmagnetfelds stehen bevorzugt senkrecht aufeinander, wobei das Antriebsmagnetfeld zumindest eine Komponente in Richtung der Bewegungsrichtung des Transportelements umfasst.

Erfindungsgemäß ist zwischen dem Linearmotor und dem Magneten des Transportelements ein Luftspalt vorhanden. Bevorzugt verläuft der Luftspalt vertikal. Durch den Luftspalt wird ein geringer Abstand zwischen dem Magneten und dem Linearmotor geschaffen, so dass der Magnet nicht an dem Linearmotor schleift. Dementsprechend kann das Transportelement lediglich im Bereich der Führungsbahn mechanischen Kontakt mit dem Linearmotor aufweisen. Die Führungsbahn kann beispielsweise durch zwei voneinander beabstandete Schienen gebildet sein, wobei das Transportelement mittels Rollen auf den Schienen laufen kann. Zwischen den Schienen kann das Antriebsmagnetfeld und/oder das Anpassungsmagnetfeld erzeugt werden.

Ist der Luftspalt in vertikaler Richtung angeordnet, so bedeutet dies, dass die größte Erstreckung des Luftspalts in vertikaler Richtung verläuft. Entsprechend können auch die Schienen in der vertikalen Richtung voneinander beabstandet sein. Dann verläuft die Anziehungskraft in horizontaler Richtung. In diesem Fall läuft das Transportelement somit "außen" auf der Führungsbahn, wobei z.B. in Kurven die Zentrifugalkraft das Transportelement von der Führungsbahn abheben würde. Durch die Stärkung der Anziehungskraft kann dann der Zentrifugalkraft entgegengewirkt werden, d.h. die Anziehungskraft wirkt in Richtung der Zentripetalkraft.

Ebenfalls ist es aber auch möglich, dass die Schienen in horizontaler Richtung voneinander beabstandet sind, wobei die Anziehungskraft dann in vertikaler Richtung verläuft.

Gemäß einer weiteren vorteilhaften Ausführungsform wird die Anziehungskraft anhand der Größe des Luftspalts eingestellt, wobei insbesondere eine erhöhte Größe des Luftspalts zu einer Stärkung der Anziehungskraft führt, wobei die Anziehungskraft weiter bevorzugt so eingestellt wird, dass die Größe des Luftspalts konstant und/oder innerhalb vorbestimmter Grenzen bleibt. Bei der Größe des Luftspalts kann es sich insbesondere um die kleinste Erstreckungsrichtung des Luftspalts handeln und/oder um die Richtung, die sich zwischen dem Linearmotor und dem Magneten des Transportelements erstreckt.

Durchläuft das Transportelement nun eine Kurve und wird damit von der Zentrifugalkraft von dem Linearmotor weggedrückt, so kann sich der Luftspalt vergrößern. Dies kann erkannt werden, woraufhin dann ein Steuerbefehl erzeugt wird, auf welchen hin die Anziehungskraft verstärkt wird, um die Größe des Luftspalts innerhalb der vorbestimmten Grenzen zu halten und damit sicherzustellen, dass das Transportelement weiterhin auf der Führungsbahn aufliegt. In entsprechender Weise kann eine zu kleine Größe des Luftspalts zu einer Erzeugung eines Steuerbefehls führen, der eine Schwächung der Anziehungskraft bewirkt.

Die Veränderung der Größe des Luftspalts liegt bevorzugt im Bereich von wenigen Millimetern oder von wenigen Zehntel-Millimetern. Weiter bevorzugt wird die Größe des Luftspalts innerhalb eines Bereichs zwischen 0,5 mm und 2,5 mm, bevorzugt zwischen 1,0 mm und 1,5 mm, besonders bevorzugt zwischen 1,2 mm und 1,4 mm gehalten.

Erfindungsgemäß umfasst der Linearmotor zumindest eine Spule, wobei das Transportsystem ausgebildet ist, anhand von Änderungen der Induktivität der Spule die Größe des Luftspalts zu bestimmen. Insbesondere umfasst der Linearmotor eine Vielzahl von entlang der Führungsbahn angeordneten Spulen, von welchen jeweils diejenigen zur Erfassung der Änderung der Induktivität herangezogen werden, welche sich momentan in der Nähe, d.h. innerhalb eines vorbestimmten Abstands, zu dem Transportelement befinden.

Die entlang der Führungsbahn angeordneten Spulen erzeugen bevorzugt das Antriebsmagnetfeld und/oder das Anpassungsmagnetfeld. Die Spulen sorgen so für den Vortrieb der Transportelemente und auch für die Stärkung oder Schwächung der Anziehungskraft.

Da der sich in der Nähe der Spule befindliche Magnet des Transportelements einen Einfluss auf die Größe der Induktivität der Spule besitzt und die Induktivität bei steigendem Abstand zwischen Spule und Magnet verringert wird, kann anhand der Änderung der Induktivität die Größe des Luftspalts bestimmt werden. Die Größe des Luftspalts kann dabei z.B. quantitativ bestimmt werden. Ebenfalls ist es aber auch möglich, lediglich qualitativ Größenänderungen des Luftspalts zu ermitteln.

Alternativ oder zusätzlich kann die Größe des Luftspalts auch anhand eines Hall-Sensors, bevorzugt eines 3D-Hall-Sensors, bestimmt werden. Hierbei können mittels des Hall-Sensors die Position des Magneten des Transportelements und damit die Größe des Luftspalts bestimmt werden. Ebenfalls ist es möglich, dass das Transportelement einen Zusatzmagneten umfasst, dessen Position dann durch den Hall-Sensor erfasst wird. Eine Relativposition des Zusatzmagneten zu dem Magneten des Transportelements kann bekannt sein, wodurch wiederum die Größe des Luftspalts ermittelbar ist.

Weiterhin kann, alternativ oder zusätzlich zur Einstellung der Anziehungskraft anhand der Größe des Luftspalts, die (resultierende) Anziehungskraft direkt gemessen werden. Beispielsweise kann die Kraft gemessen werden, mit welcher das Transportelement auf die Führungsbahn gedrückt wird, z.B. mittels Piezo-Elementen an oder in den Rollen des Transportelements, welche auf der Führungsbahn laufen, oder an der Führungsbahn. In Abhängigkeit der so ermittelten Kraft kann eine Stärkung oder Schwächung z.B. des Anpassungsmagnetfelds erfolgen, z.B. um die Anziehungskraft im Wesentlichen konstant zu halten.

Weiter alternativ oder zusätzlich ist es auch möglich, die auf das Transportelement wirkende Zentrifugalkraft anhand einer ermittelten Geschwindigkeit des Transportelements und anhand eines bekannten Bahnradius zu berechnen. Die so ermittelte Zentrifugalkraft kann dann durch die Erzeugung des Anpassungsmagnetfelds ausgeglichen werden.

Hierbei wird die Zentrifugalkraft bevorzugt nach der Formel

$$F_z = m * v^2/r$$

berechnet, wobei $F_Z$ die Zentrifugalkraft, m die Masse des Transportelements, v die Geschwindigkeit des Transportelements und r der Radius der Führungsbahn ist.

Für den Fall, dass die Größe des Luftspalts anhand der Induktivität der Spule bestimmt wird, kann das Transportsystem bevorzugt ausgebildet sein, die Spule mit einer Rechteckspannung oder einer anderen veränderlichen Spannung zu beaufschlagen, wobei aus einem resultierenden Stromverlauf durch die Spule die Induktivität der Spule ermittelt wird. Hierbei wird die Frequenz der Rechteckspannung hoch genug gewählt (z.B. im Bereich mehrerer Kilohertz), um einen jeweils etwa linear (und nicht exponentiell) ansteigenden beziehungsweise fallenden Verlauf des resultierenden Stroms zu erzeugen. Bevorzugt wird dabei die Spule als ideale Spule modelliert, welche in Reihe mit einem ohmschen Widerstand und einer EMK-Spannungsquelle geschaltet ist. Die EMK-Spannungsquelle symbolisiert dabei die elektromotorische Kraft, welche von dem Magneten in der Spule induziert wird. Die Spannung an der Spule kann dementsprechend mit der Formel

$$U = U_{EMK} + R * i + L * (di/dt)$$

ausgedrückt werden. Dementsprechend ist die Induktivität

$$L = (U - U_{EMK} - R * i) / (di/dt),$$

wobei U die Spannung an der Spule, $U_{EMK}$ die Spannung der elektromotorischen Kraft, R die Größe des ohmschen Widerstands, i der durch die Spule fließende Strom und L die Größe der Induktivität darstellt.

Nachdem die Größe der Induktivität proportional zu der Größe des Luftspalts ist, d.h.

$$L \approx (N^2 * \mu_0 * A) / l_{Air},$$

woraus folgt

$$l_{Air} \approx (N^2 * \mu_0 * A) / L,$$

so kann die Länge $l_{Air}$ aus der Größe der Induktivität berechnet werden. Hierbei ist N die Anzahl der Spulenwicklungen, A die Spulenfläche, $\mu_0$ die magnetische Permeabilität von Luft und $l_{Air}$ die doppelte Größe des Luftspalts.

Dementsprechend ist eine relative Änderung der Induktivität auf eine relative Änderung der Größe des Luftspalts zurückzuführen ($\Delta L \approx 1/\Delta l_{Air}$).

Erfindungsgemäß umfasst der Linearmotor ein erstes Regelelement zur Regelung der Bewegung des Transportelements, wobei der Linearmotor zusätzlich ein zweites Regelelement umfasst, welches die Steuerbefehle und bevorzugt eine Größe des Luftspalts empfängt, wobei das zweite Regelelement die Stärkung und/oder Schwächung der Anziehungskraft bewirkt, wobei das erste und das zweite Regelelement einen in die Spule eingeprägten Strom bestimmen. Bei den Regelelementen kann es sich jeweils um Regelkreise handeln. Bei dem ersten Regelelement handelt es sich bevorzugt um einen Standard-Regelkreis des Linearmotors, welcher die Ströme in den Spulen des Linearmotors derart einstellt, dass das Transportelement mittels des Linearmotors bewegt werden kann.

Das zweite Regelelement kann für die Stärkung und/oder Schwächung der Anziehungskraft zuständig sein, wobei die beiden Regelelemente gemeinsam den in die Spule beziehungsweise die Spulen des Linearmotors eingeprägten Strom (oder die dafür notwendige Spannung) bestimmen.

Insbesondere können beide Regelelemente mittels eines Analog-Digital-Wandlers über den momentan in der Spule fließenden Strom informiert werden, wobei der Analog-Digital-Wandler den Strom in der Spule misst. Ein Stromsteuermodul kann insbesondere Informationen von dem ersten und dem zweiten Regelelement erhalten und anhand des von dem Analog-Digital-Wandler gemessenen Stroms den Strom in der Spule entsprechend einstellen. Ein Signal des Analog-Digital-Wandlers kann auch einem Induktivitätsbestimmungsmodul zugeführt werden, welches die Induktivität der Spule ermittelt. Aus der Induktivität der Spule kann wiederum ein Luftspaltbestimmungsmodul die Größe des Luftspalts ermitteln. Die so ermittelte Größe des Luftspalts kann wiederum einem Feldkontrollmodul zugeführt werden. Das Feldkontrollmodul kann auf eine Position des Transportelements zugreifen und hieraus das benötigte Anpassungsmagnetfeld bestimmen, wobei diese Informationen an das Stromsteuermodul übermittelt werden.

Das Feldkontrollmodul, das Luftspaltbestimmungsmodul und das Induktivitätsbestimmungsmodul können gemeinsam das zweite Regelelement bilden. Das erste Regelelement kann einen Positionscontroller und einen Geschwindigkeitscontroller umfassen, wobei der Geschwindigkeitscontroller dem Stromsteuermodul Anweisungen übermittelt. Der Positionscontroller kann auf eine Position des Transportelements zugreifen, wobei der Geschwindigkeitscontroller auf eine Geschwindigkeit des Transportelements zugreifen kann, welche durch die zeitliche Ableitung der Position berechnet wird.

Das Feldkontrollmodul kann die Steuerbefehle empfangen, woraufhin das Feldkontrollmodul ein Stärken und/oder Schwächen mittels des Anpassungsmagnetfelds vornimmt.

Gemäß einer weiteren vorteilhaften Ausführungsform wird ein Stärken der Anziehungskraft auf einen Steuerbefehl hin vorgenommen, wenn das Transportelement entlang einer Kurve der Führungsbahn und/oder entlang eines gekrümmten Teils der Führungsbahn bewegt wird. Das Stärken der Anziehungskraft kann also z.B. vorsorglich beim Durchfahren einer Kurve beziehungsweise eines gekrümmten Teils der Führungsbahn vorgenommen werden. Ebenfalls ist es möglich, dass in der Kurve beziehungsweise in dem gekrümmten Teil der Führungsbahn eine Vergrößerung des Luftspalts erkannt wird, woraufhin dann die Anziehungskraft vergrößert/verstärkt wird.

Erfindungsgemäß wird ein Schwächen der Anziehungskraft auf einen Steuerbefehl hin vorgenommen, welcher ankündigt, dass das Transportelement von der Führungsbahn entfernt werden soll. Das Schwächen der Anziehungskraft kann bevorzugt zumindest eine vorbestimmte Zeitdauer anhalten, so dass einem Bediener genügend Zeit verbleibt, das Transportelement von der Führungsbahn zu entfernen. Aufgrund der geschwächten Anziehungskraft ist zum Entfernen kein Werkzeug oder Roboter nötig. Es versteht sich, dass die Schwächung auch dann aufrechterhalten wird, wenn sich durch das Entfernen des Transportelements z.B. der Luftspalt vergrößert und/oder die Kraft auf die Rollen des Transportelements sich verringert.

Das Schwächen der Anziehungskraft kann ebenfalls erfolgen, wenn ein Transportelement neu auf die Führungsbahn aufgesetzt werden soll und/oder aufgesetzt wird. Dies kann ein Bediener z.B. durch Drücken einer Taste ankündigen, woraufhin der entsprechende Steuerbefehl erzeugt wird. Alternativ oder zusätzlich kann das Transportsystem ausgebildet sein, automatisch das Annähern und/oder Aufsetzen eines neuen Transportelements zu erkennen, um daraufhin automatisch den Steuerbefehl zum Auslösen der Schwächung zu erzeugen.

Weiterer Gegenstand der Erfindung ist ein Verfahren zur Steuerung eines Transportsystems, insbesondere eines Multi-Carrier-Systems, gemäß Anspruch 10.

Die hierin zu dem Transportsystem getroffenen Aussagen gelten entsprechend für das erfindungsgemäße Verfahren. Dies gilt insbesondere bezüglich Vorteilen und bevorzugten Ausführungsformen.

Nachfolgend wird die Erfindung rein beispielhaft unter Bezugnahme auf die Zeichnungen beschrieben. Es zeigen:

Fig. 1     eine perspektivische Detailansicht eines Multi-Carrier-Systems;

Fig. 2     eine perspektivische Teilansicht des Multi-Carrier-Systems; und

Fig. 3     eine schematische Darstellung des internen Aufbaus eines Linearmotors.

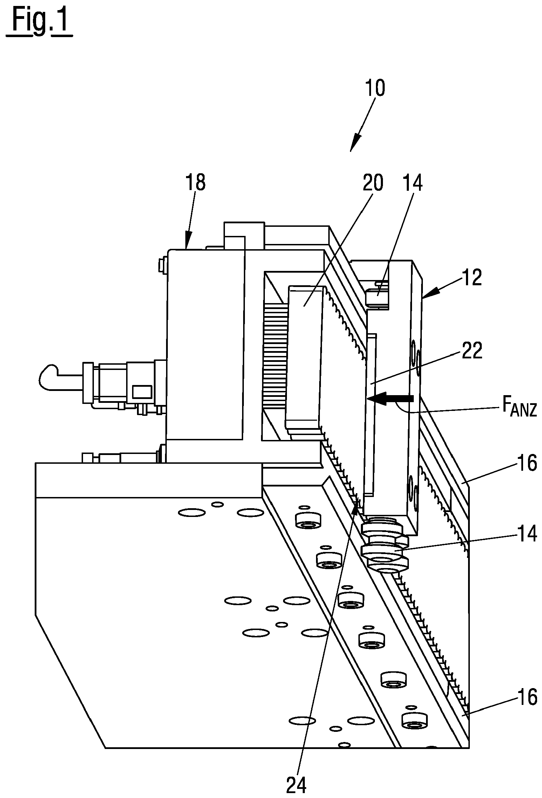

Fig. 1 zeigt ein Detail eines Multi-Carrier-System 10 in perspektivischer Ansicht von unten, bei welchem ein Transportelement, d.h. ein Mover 12, mit Rollen 14 auf einer Führungsbahn 16 mit zwei vertikal beabstandeten Schienen aufliegt. Die Führungsbahn 16 ist Teil eines Linearmotors 18.

Der Linearmotor 18 umfasst eine Vielzahl von Spulen 20, die entlang der Führungsbahn 16 zwischen den Schienen angeordnet sind. Die Spulen erzeugen ein Magnetfeld, welches auf einen Permanentmagneten 22 des Movers 12 wirkt und den Mover 12 entlang der Führungsbahn 16 bewegt.

Die Spulen 20 des Linearmotors 18 sind durch einen Luftspalt 24 von dem Permanentmagneten 22 beabstandet.

Der Luftspalt 24 erstreckt sich in vertikaler Richtung, dies bedeutet, der Mover 12 fährt auf einer Außenseite des Multi-Carrier-Systems 10 entlang.

Der Permanentmagnet 22 wird von metallischen Komponenten des Linearmotors 18 angezogen und erzeugt dadurch eine Anziehungskraft $F_{ANZ}$, welche den Mover 12 an seinen Rollen 14 auf die Führungsbahn 16 drückt.

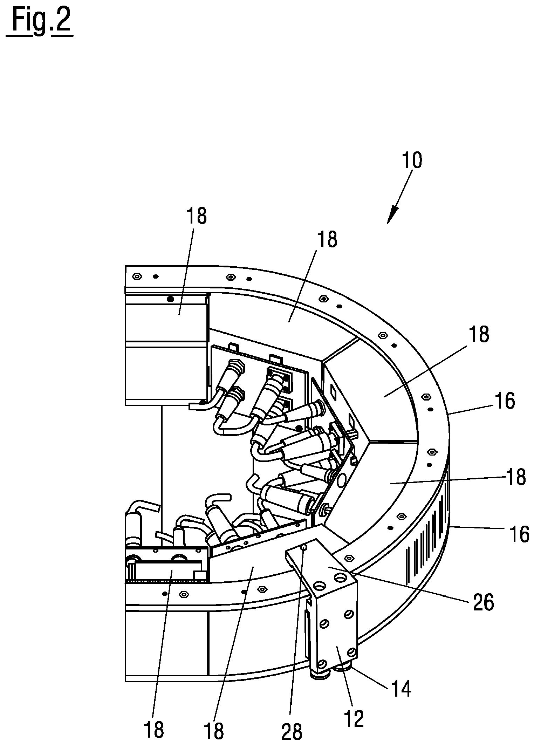

Fig. 2 zeigt eine perspektivische Ansicht des Multi-Carrier-Systems 10 in einer perspektivischen Ansicht von oben. In Fig. 2 ist zu erkennen, dass mehrere Linearmotoren 18 aneinandergereiht angeordnet sind, so dass sich eine durchgehende Führungsbahn 16 ergibt. Auf der Oberseite des Movers 12 ist ein Ausleger 26 angeordnet, auf welchen wiederum ein Zusatzmagnet 28 angebracht ist. Der Zusatzmagnet 28 kann mittels eines (nicht gezeigten) Hall-Sensors erfasst werden, um die Position und die Geschwindigkeit des Movers 12 zu ermitteln.

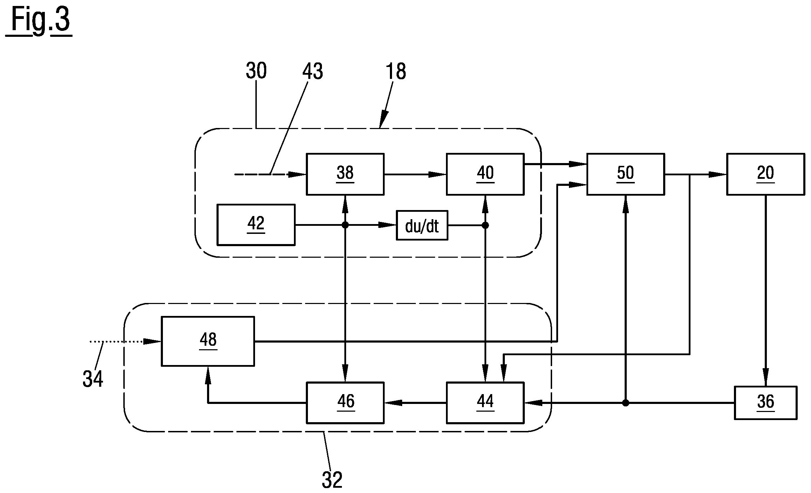

Wird der Mover 12 im Betrieb des Multi-Carrier-Systems 10 nun von den Linearmotoren 18 entlang der Führungsbahn 16 durch die in Fig. 2 gezeigte Kurve der Führungsbahn 16 bewegt, so entsteht eine Zentrifugalkraft, die der Anziehungskraft $F_{ANZ}$ entgegenwirkt und den Mover 12 von der Führungsbahn 16 wegdrängt. Hierdurch entsteht eine Vergrößerung des Luftspalts 24, was von dem Multi-Carrier-System 10 durch eine Veränderung der Induktivität der Spulen 20 festgestellt wird. In Ansprechen auf diese Veränderung wird ein Steuersignal (siehe Fig. 3) in dem Multi-Carrier-System 10 erzeugt, wobei aufgrund des Steuersignals ein Anpassungsmagnetfeld mittels der Spulen 20 erzeugt wird, welches die Anziehungskraft $F_{ANZ}$ verstärkt, so dass der Mover 12 beim Durchfahren der Kurve sicher auf der Führungsbahn 16 gehalten wird.

Soll nun ein Mover 12 von der Führungsbahn 16 entfernt werden, so kann auf einen entsprechenden Steuerbefehl hin ein Anpassungsmagnetfeld mittels der Spulen 20 erzeugt werden, welches der Anziehungskraft $F_{ANZ}$ entgegenwirkt, wodurch die resultierende Anziehungskraft $F_{ANZ}$ kleiner wird und der Mover 12 z.B. manuell von der Führungsbahn 16 entfernt werden kann.

Fig. 3 zeigt eine schematische Darstellung des internen Aufbaus eines Linearmotors 18. Gemäß Fig. 3 umfasst der Linearmotor 18 einen ersten Regelkreis 30 zur Regelung der Bewegung des Transportelements 12, wobei der Linearmotor 18 zusätzlich einen zweiten Regelkreis 32 umfasst, welcher Steuerbefehle 34 empfängt und die Stärkung und/oder Schwächung der Anziehungskraft $F_{ANZ}$ bewirkt.

Der Linearmotor 18 umfasst einen Analog-Digital-Wandler 36, welcher den Wert eines momentan in der Spule 20 fließenden Stroms in digitaler Form an die beiden Regelkreise 30, 32 ausgibt.

Der erste Regelkreis 30 umfasst einen Positionscontroller 38 und einen Geschwindigkeitscontroller 40. Der Positionscontroller 38 greift auf eine anhand des Zusatzmagneten 28 gemessene Position 42 des Movers 12 zu, wobei der Geschwindigkeitscontroller 40 auf eine Geschwindigkeit des Movers 12 zugreift, welche durch die zeitliche Ableitung der Position 42 berechnet wird. Der Positionscontroller 38 erhält eine Sollposition 43 des Movers 12 von dem Multi-Carrier-System 10 (in Fig. 3 durch einen gestrichelten Pfeil angedeutet), wobei aufgrund der Sollposition 43 eine Bewegung des Movers 12 durchgeführt wird.

Ein Signal des Analog-Digital-Wandlers 36 wird einem Induktivitätsbestimmungsmodul 44 des zweiten Regelkreises 32 zugeführt, welches die Induktivität der Spule 20 ermittelt. Aus der Induktivität der Spule 20 bestimmt wiederum ein Luftspaltbestimmungsmodul 46 die Größe des Luftspalts 24. Die so ermittelte Größe des Luftspalts 24 wird wiederum einem Feldkontrollmodul 48 zugeführt. Das Feldkontrollmodul 48 kann auf die Position 42 des Movers 12 zugreifen und hieraus das benötigte Anpassungsmagnetfeld bestimmen.

Die Informationen zu dem benötigten Anpassungsmagnetfeld und ein Signal des Geschwindigkeitscontrollers 40 werden einem Stromsteuermodul 50 zugeführt, welches aus den eingehenden Informationen mittels (nicht gezeigter) Leistungselektronik einen entsprechenden Strom durch die Spule 20 bzw. die Spulen 20 des Linearmotors 18 erzeugt. Der Strom kann dabei neben einer Bewegung des Movers 12 eine Stärkung oder eine Schwächung der Anziehungskraft $F_{ANZ}$ bewirken.

Durch die so geschaffene Möglichkeit der gezielten Veränderung der Anziehungskraft $F_{ANZ}$ kann das Multi-Carrier-System 10 an verschiedene Betriebssituationen dynamisch angepasst werden, wodurch sich zusätzliche Einsatzbereiche für das Multi-Carrier-System 10 ergeben können.

Bezugszeichenliste

| | |
|---|---|
| 10 | Multi-Carrier-System |
| 12 | Mover |
| 14 | Rolle |
| 16 | Führungsbahn |
| 18 | Linearmotor |
| 20 | Spule |
| 22 | Permanentmagnet |
| 24 | Luftspalt |
| 26 | Ausleger |
| 28 | Zusatzmagnet |
| 30 | erster Regelkreis |
| 32 | zweiter Regelkreis |
| 34 | Steuerbefehl |
| 36 | Analog-Digital-Wandler |
| 38 | Positionscontroller |
| 40 | Geschwindigkeitscontroller |
| 42 | gemessene Position |
| 43 | Sollposition |
| 44 | Induktivitätsbestimmungsmodul |
| 46 | Luftspaltbestimmungsmodul |
| 48 | Feldkontrollmodul |
| 50 | Stromsteuermodul |
| $F_{ANZ}$ | Anziehungskraft |

Patentansprüche

1. Transportsystem (10), insbesondere Multi-Carrier-System, mit zumindest einem Transportelement (12), welches mittels zumindest eines Linearmotors (18) bewegbar ist, wobei das Transportelement (12) während einer Bewegung durch den Linearmotor (18) auf einer Führungsbahn (16) des Linearmotors (18) aufliegt, wobei das Transportelement (12) zumindest einen Magneten (22) umfasst, welcher eine Anziehungskraft ($F_{ANZ}$) erzeugt, durch welche das Transportelement (12) an die Führungsbahn (16) angedrückt wird,
wobei das Transportsystem (10) ausgebildet ist, die Anziehungskraft ($F_{ANZ}$) auf einen Steuerbefehl (34) hin zu stärken und/oder zu schwächen,
wobei zwischen dem Linearmotor (18) und dem Magneten (22) des Transportelements (12) ein Luftspalt (24) vorhanden ist,
wobei der Linearmotor (18) zumindest eine Spule (20) umfasst,
dadurch gekennzeichnet, dass
das Transportsystem (10) ausgebildet ist, anhand von Änderungen der Induktivität der Spule (20) die Größe des Luftspalts (24) zu bestimmen,
wobei der Linearmotor (18) ein erstes Regelelement (30) zur Regelung der Bewegung des Transportelements (12) umfasst, wobei der Linearmotor zusätzlich ein zweites Regelelement (32) umfasst, welches die Steuerbefehle (34) empfängt, wobei das zweite Regelelement (32) die Stärkung und/oder Schwächung der Anziehungskraft ($F_{ANZ}$) bewirkt, wobei das erste und das zweite Regelelement (30, 32) einen in die Spule (20) eingeprägten Strom bestimmen,
wobei ein Schwächen der Anziehungskraft ($F_{ANZ}$) auf den Steuerbefehl (34) hin vorgenommen wird, welcher ankündigt, dass das Transportelement (12) von der Führungsbahn (16) entfernt werden soll.

2. Transportsystem (10) nach Anspruch 1,
dadurch gekennzeichnet, dass
das Stärken und/oder Schwächen der von dem Magneten (22) erzeugten Anziehungskraft ($F_{ANZ}$) mittels eines von dem Linearmotor (18) erzeugten Anpassungsmagnetfelds erfolgt.

3. Transportsystem (10) nach Anspruch 2,
dadurch gekennzeichnet, dass
das Anpassungsmagnetfeld nur eine Kraft in Richtung der Anziehungskraft ($F_{ANZ}$) erzeugt.

4. Transportsystem (10) nach Anspruch 3,
dadurch gekennzeichnet, dass
das Transportsystem (10) ausgebildet ist, eine Position (42) des Transportelements (12) zu bestimmen und mittels des Linearmotors (18) das Anpassungsmagnetfeld derart im Bereich des Transportelements (12) zu erzeugen, dass das Anpassungsmagnetfeld entweder nur eine Kraft in Richtung der Anziehungskraft ($F_{ANZ}$) oder entgegengesetzt der Anziehungskraft ($F_{ANZ}$) erzeugt.

5. Transportsystem (10) nach zumindest einem der vorstehenden Ansprüche,
**dadurch gekennzeichnet, dass**
der Luftspalt (24) bevorzugt vertikal verläuft.

6. Transportsystem (10) nach Anspruch 5,
**dadurch gekennzeichnet, dass**
die Anziehungskraft ($F_{ANZ}$) anhand der Größe des Luftspalts (24) eingestellt wird, wobei insbesondere eine erhöhte Größe des Luftspalts (24) zu einer Stärkung der Anziehungskraft ($F_{ANZ}$) führt, wobei die Anziehungskraft ($F_{ANZ}$) weiter bevorzugt so eingestellt wird, dass die Größe des Luftspalts (24) konstant und/oder innerhalb vorbestimmter Grenzen bleibt.

7. Transportsystem (10) nach zumindest einem der vorstehenden Ansprüche,
**dadurch gekennzeichnet, dass**
das Transportsystem (10) ausgebildet ist, die Spule (20) mit einer Rechteckspannung oder einer anderen veränderlichen Spannung zu beaufschlagen, wobei aus einem resultierenden Stromverlauf durch die Spule (20) die Induktivität der Spule (20) ermittelt wird.

8. Transportsystem (10) nach zumindest einem der vorstehenden Ansprüche,
**dadurch gekennzeichnet, dass**
das zweite Regelelement (32) eine Größe des Luftspalts empfängt.

9. Transportsystem (10) nach zumindest einem der vorstehenden Ansprüche,
**dadurch gekennzeichnet, dass**
ein Stärken der Anziehungskraft ($F_{ANZ}$) auf den Steuerbefehl (34) hin vorgenommen wird, wenn das Transportelement (12) entlang einer Kurve der Führungsbahn (16) und/oder entlang eines gekrümmten Teils der Führungsbahn (16) bewegt wird.

10. Verfahren zur Steuerung eines Transportsystem (10), insbesondere eines Multi-Carrier-Systems, wobei
zumindest ein Transportelement (12) mittels zumindest eines Linearmotors (18) bewegt wird, wobei das Transportelement (12) während einer Bewegung durch den Linearmotor (18) auf einer Führungsbahn (16) des Linearmotors (18) aufliegt, wobei das Transportelement (12) zumindest einen Magneten (22) umfasst, welcher eine Anziehungskraft ($F_{ANZ}$) erzeugt, durch welche das Transportelement (12) an die Führungsbahn (16) angedrückt wird,
wobei die Anziehungskraft ($F_{ANZ}$) auf einen Steuerbefehl (34) hin gestärkt und/oder geschwächt wird
wobei zwischen dem Linearmotor (18) und dem Magneten (22) des Transportelements (12) ein Luftspalt (24) vorhanden ist,
wobei der Linearmotor (18) zumindest eine Spule (20) umfasst,

**dadurch gekennzeichnet, dass**
anhand von Änderungen der Induktivität der Spule (20) die Größe des Luftspalts (24) bestimmt wird, wobei der Linearmotor (18) ein erstes Regelelement (30) zur Regelung der Bewegung des Transportelements (12) umfasst, wobei der Linearmotor zusätzlich ein zweites Regelelement (32) umfasst, welches die Steuerbefehle (34) empfängt, wobei das zweite Regelelement (32) die Stärkung und/oder Schwächung der Anziehungskraft ($F_{ANZ}$) bewirkt, wobei das erste und das zweite Regelelement (30, 32) einen in die Spule (20) eingeprägten Strom bestimmen,
wobei ein Schwächen der Anziehungskraft ($F_{ANZ}$) auf den Steuerbefehl (34) hin vorgenommen wird, welcher ankündigt, dass das Transportelement (12) von der Führungsbahn (16) entfernt werden soll.

**Claims**

1. A transport system (10), in particular a multi-carrier system, comprising at least one transport element (12) which is movable by means of at least one linear motor (18), wherein the transport element (12) is disposed on a guide track (16) of the linear motor (18) during a movement by the linear motor (18), and wherein the transport element (12) comprises at least one magnet (22) which generates an attractive force ($F_{ANZ}$) by which the transport element (12) is pressed toward the guide track (16);
wherein the transport system (10) is configured to strengthen and/or to weaken the attractive force ($F_{ANZ}$) in response to a control command (34);
wherein an air gap (24) is present between the linear motor (18) and the magnet (22) of the transport element (12);
wherein the linear motor (18) comprises at least one coil (20), **characterized in that**
the transport system (10) is configured to determine the size of the air gap (24) based on changes in the inductance of the coil (20),
wherein the linear motor (18) comprises a first control element (30) for regulating the movement of the transport element (12), wherein the linear motor additionally comprises a second control element (32) which receives the control commands (34), wherein the second control element (32) effects the strengthening and/or weakening of the attractive force ($F_{ANZ}$), and
wherein the first and second control elements (30, 32) determine a current imparted into the coil (20); and
wherein a weakening of the attractive force ($F_{ANZ}$) is performed in response to the control command (34) which announces that the transport element (12) is to be removed from the guide track (16).

**2.** A transport system (10) in accordance with claim 1, **characterized in that** the strengthening and/or weakening of the attractive force ($F_{ANZ}$) generated by the magnet (22) takes place by means of a matching magnetic field generated by the linear motor (18).

**3.** A transport system (10) in accordance with claim 2, **characterized in that** the matching magnetic field only generates a force in the direction of the attractive force ($F_{ANZ}$).

**4.** A transport system (10) in accordance with claim 3, **characterized in that** the transport system (10) is configured to determine a position (42) of the transport element (12) and to generate the matching magnetic field in the region of the transport element (12) by means of the linear motor (18) such that the matching magnetic field either only generates a force in the direction of the attractive force ($F_{ANZ}$) or opposite to the attractive force ($F_{ANZ}$).

**5.** A transport system (10) in accordance with at least one of the preceding claims, **characterized in that** the air gap (24) preferably extends vertically.

**6.** A transport system (10) in accordance with claim 5, **characterized in that** the attractive force ($F_{ANZ}$) is set based on the size of the air gap (24), with in particular an increased size of the air gap (24) resulting in a strengthening of the attractive force ($F_{ANZ}$), with the attractive force ($F_{ANZ}$) further preferably being set such that the size of the air gap (24) remains constant and/or within predetermined limits.

**7.** A transport system (10) in accordance with at least one of the preceding claims, **characterized in that** the transport system (10) is configured to apply a square wave voltage or another variable voltage to the coil (20), with the inductance of the coil (20) being determined from a resulting current course through the coil (20).

**8.** A transport system (10) in accordance with at least one of the preceding claims, **characterized in that** the second control element (32) receives a size of the air gap.

**9.** A transport system (10) in accordance with at least one of the preceding claims, **characterized in that** a strengthening of the attractive force ($F_{ANZ}$) is performed in response to the control command (34) when the transport element (12) is moved along a curve of the guide track (16) and/or along a curved part of the guide track (16).

**10.** A method of controlling a transport system (10), in particular a multi-carrier system, wherein at least one transport element (12) is moved by means of at least one linear motor (18), wherein the transport element (12) is disposed on a guide track (16) of the linear motor (18) during a movement by the linear motor (18), and wherein the transport element (12) comprises at least one magnet (22) which generates an attractive force ($F_{ANZ}$) by which the transport element (12) is pressed toward the guide track (16);

wherein the attractive force ($F_{ANZ}$) is strengthened and/or weakened in response to a control command (34);

wherein an air gap (24) is present between the linear motor (18) and the magnet (22) of the transport element (12);

wherein the linear motor (18) comprises at least one coil (20), **characterized in that**

the size of the air gap (24) is determined based on changes in the inductance of the coil (20),

wherein the linear motor (18) comprises a first control element (30) for regulating the movement of the transport element (12), wherein the linear motor additionally comprises a second control element (32) which receives the control commands (34), wherein the second control element (32) effects the strengthening and/or weakening of the attractive force ($F_{ANZ}$), and

wherein the first and second control elements (30, 32) determine a current imparted into the coil (20); and

wherein a weakening of the attractive force ($F_{ANZ}$) is performed in response to the control command (34) which announces that the transport element (12) is to be removed from the guide track (16).

**Revendications**

**1.** Système de transport (10), en particulier « Multi-Carrier-System », comportant au moins un élément de transport (12) qui peut être déplacé au moyen d'au moins un moteur linéaire (18), l'élément de transport (12) reposant sur un rail de guidage (16) du moteur linéaire (18) pendant un déplacement par le moteur linéaire (18), l'élément de transport (12) comprenant au moins un aimant (22) qui génère une force d'attraction ($F_{ANZ}$) par laquelle l'élément de transport (12) est pressé contre le rail de guidage (16),

le système de transport (10) étant conçu pour renforcer et/ou affaiblir la force d'attraction ($F_{ANZ}$) en réponse à un ordre de commande (34),

un entrefer (24) étant présent entre le moteur linéaire (18) et l'aimant (22) de l'élément de transport (12), le moteur linéaire (18) comprenant au moins une bobine (20),

**caractérisé en ce que**

le système de transport (10) est conçu pour déterminer la grandeur de l'entrefer (24) à partir de variations de l'inductance de la bobine (20),

le moteur linéaire (18) comprenant un premier élément de régulation (30) pour réguler le déplacement de l'élément de transport (12), le moteur linéaire comprenant en outre un deuxième élément de régulation (32) qui reçoit les ordres de commande (34), le deuxième élément de régulation (32) provoquant le renforcement et/ou l'affaiblissement de la force d'attraction (F$_{ANZ}$), les premier et deuxième éléments de régulation (30, 32) déterminant un courant appliqué dans la bobine (20),

un affaiblissement de la force d'attraction (F$_{ANZ}$) étant effectué en réponse à l'ordre de commande (34) annonçant que l'élément de transport (12) doit être retiré du rail de guidage (16).

2. Système de transport (10) selon la revendication 1, **caractérisé en ce que**
le renforcement et/ou l'affaiblissement de la force d'attraction (F$_{ANZ}$) générée par l'aimant (22) est effectué au moyen d'un champ magnétique d'adaptation généré par le moteur linéaire (18).

3. Système de transport (10) selon la revendication 2, **caractérisé en ce que**
le champ magnétique d'adaptation génère seulement une force dans la direction de la force d'attraction (F$_{ANZ}$).

4. Système de transport (10) selon la revendication 3, **caractérisé en ce que**
le système de transport (10) est conçu pour déterminer une position (42) de l'élément de transport (12) et pour générer le champ magnétique d'adaptation dans la zone de l'élément de transport (12) au moyen du moteur linéaire (18) de telle sorte que le champ magnétique d'adaptation génère seulement une force soit dans la direction de la force d'attraction (F$_{ANZ}$), soit dans la direction opposée à la force d'attraction (F$_{ANZ}$).

5. Système de transport (10) selon au moins l'une des revendications précédentes, **caractérisé en ce que**
l'entrefer (24) s'étend de préférence verticalement.

6. Système de transport (10) selon la revendication 5, **caractérisé en ce que**
la force d'attraction (F$_{ANZ}$) est réglée à partir de la grandeur de l'entrefer (24), une augmentation de la grandeur de l'entrefer (24) entraînant en particulier un renforcement de la force d'attraction (F$_{ANZ}$), la force d'attraction (F$_{ANZ}$) étant en outre réglée de préférence de telle sorte que la grandeur de l'entrefer (24) reste constante et/ou dans des limites prédéterminées.

7. Système de transport (10) selon au moins l'une des revendications précédentes, **caractérisé en ce que**
le système de transport (10) est conçu pour appliquer une tension rectangulaire ou une autre tension variable à la bobine (20), l'inductance de la bobine (20) étant déterminée à partir d'une variation résultante du courant à travers la bobine (20).

8. Système de transport (10) selon au moins l'une des revendications précédentes, **caractérisé en ce que**
le deuxième élément de régulation (32) reçoit une grandeur de l'entrefer.

9. Système de transport (10) selon au moins l'une des revendications précédentes, **caractérisé en ce que**
une augmentation de la force d'attraction (F$_{ANZ}$) est effectuée en réponse à l'ordre de commande (34) lorsque l'élément de transport (12) est déplacé le long d'une courbe du rail de guidage (16) et/ou le long d'une partie incurvée du rail de guidage (16).

10. Procédé de commande d'un système de transport (10), en particulier d'un « Multi-Carrier-System », dans lequel
au moins un élément de transport (12) est déplacé au moyen d'au moins un moteur linéaire (18), l'élément de transport (12) reposant sur un rail de guidage (16) du moteur linéaire (18) pendant un déplacement par le moteur linéaire (18), l'élément de transport (12) comprenant au moins un aimant (22) qui génère une force d'attraction (F$_{ANZ}$) par laquelle l'élément de transport (12) est pressé contre le rail de guidage (16),
la force d'attraction (F$_{ANZ}$) étant renforcée et/ou affaiblie en réponse à un ordre de commande (34), un entrefer (24) étant présent entre le moteur linéaire (18) et l'aimant (22) de l'élément de transport (12), le moteur linéaire (18) comprenant au moins une bobine (20),

**caractérisé en ce que**

la grandeur de l'entrefer (24) est déterminée à partir de variations de l'inductance de la bobine (20), le moteur linéaire (18) comprenant un premier élément de régulation (30) pour réguler le déplacement de l'élément de transport (12), le moteur linéaire comprenant en outre un deuxième élément de régulation (32) qui reçoit les ordres de commande (34), le deuxième élément de régulation (32) provoquant le renforcement et/ou l'affaiblissement de la force d'attraction (F$_{ANZ}$), les premier et deuxième éléments de régulation (30, 32) déterminant un courant appliqué dans la bobine (20),

un affaiblissement de la force d'attraction ($F_{ANZ}$) étant effectué en réponse à l'ordre de commande (34) annonçant que l'élément de transport (12) doit être retiré du rail de guidage (16).

## Fig.1

# Fig.2

## Fig.3

EP 3 569 528 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3276076 A1